# EUROPEAN PATENT SPECIFICATION

(11) **EP 4 172 918 B1**
(45) Date of publication and mention of the grant of the patent: **02.12.2026**
(21) Application number: 21736766.3
(22) Date of filing: 18.06.2021
(51) Int. Cl.: G06Q 50/02, G06Q 10/00

(54) **FARM MANAGEMENT SYSTEM, COMPUTER-IMPLEMENTED METHOD, COMPUTER PROGRAM AND NON-VOLATILE DATA CARRIER**
LANDWIRTSCHAFTLICHES VERWALTUNGSSYSTEM, COMPUTER-IMPLEMENTIERTES VERFAHREN, COMPUTERPROGRAMM UND NICHTFLÜCHTIGER DATENTRÄGER
SYSTÈME DE GESTION AGRICOLE, MÉTHODE INTÉGRÉE À L'ORDINATEUR, PROGRAMME D'ORDINATEUR ET SUPPORT DE DONNÉES NON VOLATILES

(30) Priority: 29.06.2020 SE 2050788
(43) Date of publication of application: 03.05.2023
(73) Proprietor: DeLaval Holding AB, 147 21 Tumba (SE)
(72) Inventor: DUEHOLM, Anders, 147 21 Tumba (SE); LUNDKVIST, Erik, 147 21 Tumba (SE)
(74) Representative: DeLaval International AB
(86) International application number: PCT/SE2021/050601
(87) International publication number: WO 2022/005364

(56) References cited:
- US-A1- 2006 287 994
- US-A1- 2009 145 363
- US-A1- 2018 150 344
- US-B2- 8 191 506

## Description

### TECHNICAL FIELD

The present invention relates generally to farm management. Especially, the invention relates to a farm management system and a computer-implemented method for such a system. The invention also relates to a corresponding computer program and a non-volatile data carrier storing such a computer program.

### BACKGROUND

Today's automatic milking arrangements are highly complex installations that involve comparatively advanced technical devices. To ensure safe and reliable operation, a modern milking installation must be provided with an automatic supervision system that produces alarms in respect of any detected faulty devices. Such alarms may be indicated locally at the device in question. However preferably, the alarms should also be sent to a remote receiver, such as a mobile terminal, for example a smartphone or a laptop.

US 8,191,506 describes a milking system containing a plurality of apparatuses, wherein each of the apparatuses includes a device for performing an action related to the operation of the milking system, a microprocessor, an error message generating system for generating error messages about errors that have occurred in the apparatus; and means for communicating said error messages to all other ones of the apparatuses. Each of the error messages contains information regarding the nature and severity and optionally physical location of the error and is inter-pretable by all other ones of the apparatuses.

EP 1 212 938 discloses a farm management system provided with a computer and at least one other automatic farming system such as an animal identification system, a milking device and an automatic feeding device, which is coupled to the computer. Each of the other farming devices is arranged for obtaining and supplying to the computer animal information about an identified animal. The computer is arranged for indicating an animal when the animal information belonging to the respective animal does not meet predetermined standards and/or when, conversely, no animal information meeting predetermined standards is received. The farm management system is further arranged to automatically effect a communication connection with at least one predetermined mobile communication apparatus for sending alarm information to the predetermined apparatus when at least one of the animals is indicated and/or when at least one of the farming systems or the computer generates at least one predetermined error message.

Thus, systems exist for handling error messages in various farm environments. Although the existing systems may be very useful problematic scenarios may arise. Namely, in many cases, the number of error messages sent out becomes overwhelming for the recipients of these messages. Actually, it is not unusual that certain kinds of error messages are generated in the range of thousands per day. Of course, it is practically impossible for a user to acquire any sensible information from such an amount of error messages. It is therefore an obvious risk that a critical error message is drowned in countless less important error messages.

### SUMMARY

The object of the present invention is therefore to offer a solution that mitigates the above problems and provides an efficient handling of error messages in a farm environment.

According to one aspect of the invention, the object is achieved by a farm management system including a message handling node. The message handling node, in turn, is configured to: receive error messages from a number of automatic devices; generate at least one error report based on the received error messages; and send the at least one error report to at least one user terminal. Specifically, the message handling node is configured to generate the at least one error report of a basic or auxiliary type by applying a rules system prescribing that the at least one error report in respect of a particular one of the automatic devices be generated based on the fulfillment of a frequency criterion relating to a number of times at which the message handling node receives the error messages from said particular one automatic device within at least one previous period. For example, when receiving a first error message of a first type from the particular one automatic device, the message handling node may be configured to check if the frequency criterion is fulfilled by comparing a first cumulative count of error messages of the first type received from the particular one automatic device during a first previous period with a first cumulative count threshold. If the first cumulative count exceeds the first cumulative count threshold, the message handling node is configured to send the at least one error report indicating that the first cumulative count threshold has been exceeded by error messages of the first type from said particular one automatic device.

The above system is advantageous because it allows for a highly flexible forwarding of error information. The user may tailor the manner in which he/she receives error reports either on a very general level, so that for example all error messages below a particular number per unit time are filtered out; or very specifically on a per-device per-error-type level, so that for example certain types of error messages below a particular number per unit time are filtered out, whereas error messages from identified devices always come through regardless of their frequency.

According to one embodiment of this aspect of the invention, when receiving a first error message of a first type from the particular one automatic device, the message handling node is configured to check if the frequency criterion is fulfilled by comparing a first cumulative count of error messages of the first type received from the particular one automatic device during a first previous period with a first cumulative count threshold. Only if the first cumulative count exceeds the first cumulative count threshold, the message handling node is configured to send the at least one error report indicating that the first cumulative count threshold has been exceeded by error messages of the first type from the particular one automatic device. As a result, the user will not receive any error messages at all in respect of the particular one automatic device of the first type before a given number of error messages have been generated, say 10, 100 or 1000 depending on the user's preferences and the duration of the first period.

According to another embodiment of this aspect of the invention, if the first cumulative count exceeds the first cumulative count threshold at a first point in time, the message handling node is instead configured to, *after* the first point in time send the at least one error report of the auxiliary type indicating that the cumulative count of error messages of the particular type has been received from the particular one automatic device during a second previous period, where the at least one error report of the auxiliary type is sent only at predefined points in time. Consequently, the user will receive all error messages in respect of the particular one automatic device up until a given number of error messages have been generated, say 10, 100 or 1000 depending on the user's preferences and the duration of the first period. However, after that, the user will only receive error reports of the auxiliary type. Thus, he/she will not risk being drowned in error messages. Yet, if only relatively few error messages are produced, he/she will not risk missing these either.

The message handling node may be configured to set the above-mentioned first cumulative count threshold dynamically based on a time parameter, such that a duration of the first previous period is different at different times of the day. Thereby, the filtering of error messages can vary over the day, for instance depending on the specific activities in the farm.

According to yet another embodiment of this aspect of the invention, the particular one automatic device belongs to a first category of devices, say ear tags. The message handling node is here configured to check if the frequency criterion is fulfilled by comparing the first cumulative count of error messages of the first type, e.g. related to low battery, received from a further automatic device belonging to a second category of devices, say activity meters, during the first previous period with a second cumulative count threshold. If the first cumulative count exceeds the second cumulative count threshold, the message handling node is configured to send the at least one error report indicating that the second cumulative count threshold has been exceeded by error messages of the first type from said further automatic device. This means that for example error reports relating to low battery can treated differently depending on whether they relate to ear tags or activity meters. Of course, the automatic device of the first and second categories may also be of identical types, so that the categorization is purely administrative. For instance, the first category may define the activity meters of a first group of animals, and the second category may define the activity meters of a second group of animals.

According to still another embodiment of this aspect of the invention, the message handling node is configured to check if the frequency criterion is fulfilled by comparing a *sum* of the first cumulative counts of the error messages of the first type received from said particular automatic device and said further automatic device during the first previous period with a *third* cumulative count threshold. This third cumulative count threshold is different from a combined magnitude of the first and second cumulative count thresholds, i.e. the third cumulative count threshold may either be higher than or lower than the sum of the first cumulative counts in respect of the particular and further automatic devices. In any case, if said sum of the first cumulative counts exceeds the third cumulative count threshold, the message handling node is configured to send the at least one error report indicating that the third cumulative count threshold has been exceeded by error messages of the first type from said particular automatic device and said further automatic device. This is beneficial because it enables supervision of various combinatory effects of errors. For example, for each individual device a certain amount of errors can be tolerated per unit time. However, an acceptable combined amount of errors in two or more devices may be lower than the sum of the acceptable individual number of errors in these devices.

According to another embodiment of this aspect of the invention, the message handling node is configured to analyze the received error messages, which error messages represent at least two different types of error messages and/or have been received from at least two different automatic devices to determine an estimated cause of a combination of at least two of said at least two the error messages. The message handling node is further configured to present the estimated cause in the at least one error report of the auxiliary type. Such an analysis can be made by studying a consecutive order in which different error messages occur and/or by studying how various combinations of error messages occur. For example, a vacuum-sensor error occurring in conjunction with a teat-cup-attachment error may indicate a faulty vacuum pressure level.

According to a further embodiment of this aspect of the invention, the rules system prescribes that a subgroup of the error messages pertains to critical alarms. If the message handling node receives an error message in this subgroup, the message handling node is configured to send out the at least one error report with an indication of the critical alarm to which the error message pertains irrespective of whether the frequency criterion is fulfilled relating to a number of times per unit time the message handling node receives said error message in said subgroup. In other words, the critical alarms always pass through to the receiving user terminal(s).

According to still another embodiment of this aspect of the invention, the message handling node is configured to check if an emergency criterion is fulfilled by comparing the first cumulative count of error messages of the first type received from the particular one automatic device during the first previous period with an emergency cumulative count threshold above the first cumulative count threshold. If the first cumulative count exceeds the emergency cumulative count threshold, the message handling node is configured to send the at least one error report indicating that the emergency cumulative count threshold has been exceeded by error messages of the first type from said particular one automatic device. Thus, an emergency alarm may be triggered when a total volume of error messages has been reached.

According to another embodiment of this aspect of the invention, the system further includes a control node, which is configured to: receive the at least one error report; generate at least one statistic report based on the at least one error report; and store the at least one statistic report in a digital storage resource. The control node thus maintains a record over various error reports generated over time. Inter alia, this may constitute a basis for future maintenance of the farm devices.

Preferably, the control node is configured to receive at least one programming command. In response to the at least one programming command the control node is further configured to generate at least one rule adjustment instruction, and send the at least one rule adjustment instruction to the message handling node. The at least one rule adjustment instruction, in turn, is configured to alter the rules system that is applied to the error messages received in the message handling node. Hence, the user may alter the error-filtering function in a straightforward manner.

According to another aspect of the invention, the object is achieved by a computer-implemented method performed in a farm management system. The method involves receiving error messages from a number of automatic devices; generating at least one error report based on the received error messages; and sending the at least one error report to at least one user terminal. Specifically, the at least one error report is generated by applying a rules system prescribing that the at least one error report in respect of a particular one automatic device be generated based on the fulfillment of a frequency criterion relating to number of times at which the error messages from the particular one automatic device are received within at least one previous period. The advantages of this method, as well as the preferred embodiments thereof, are apparent from the discussion above with reference to the system.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a farm management system according to one embodiment the invention;
- Figures 2-3: show diagrams illustrating how alarms may be handled according to embodiments of the invention;
- Figure 4: shows a block diagram over a message handling node according to one embodiment the invention; and
- Figure 5: illustrates, by means of a flow diagram, the general method according to the invention.

### DETAILED DESCRIPTION

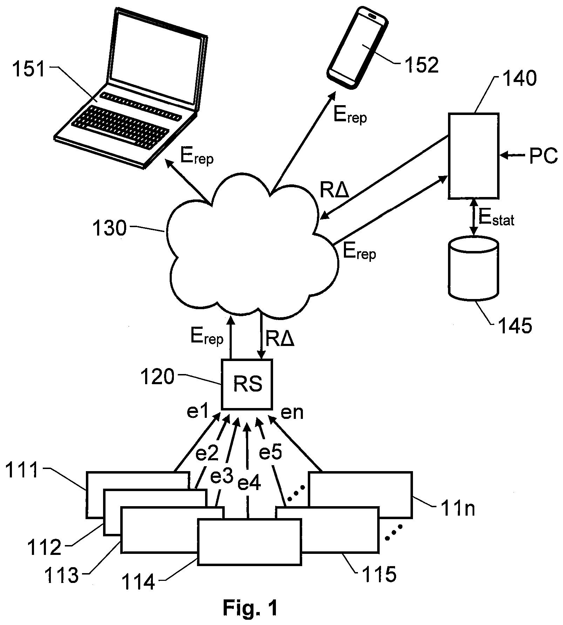

Figure 1 shows a farm management system according to one embodiment the invention. The farm management system contains a message handling node 120. According to one embodiments of the invention, the farm management system also contains a control node 140.

The message handling node 120 is configured to receive error messages e1, e2, e3, e4, e5,..., en from a number of automatic devices, here symbolically illustrated by boxes 111, 112, 113, 114, 115 and 11n respectively.

The main task of the message handling node 120 is to filter the received error messages e1, e2, e3, e4, e5,..., en, so that end recipients in the form of user terminals, here exemplified by a laptop computer 151 and a smartphone 152 respectively, receive a reasonable number of error indications in a perspicuous manner. The user terminals 151 and 152 can be handled by a farmer, a service technician, a member of administrative staff etc. and are preferably connected to the message handling node 120 via a respective wireless interface and at least one interconnecting network 130, such as the Internet.

Based on the received error messages e1, e2, e3, e4, e5 and en, the message handling node 120 is configured to generate at least one error report of a basic type BSC or an auxiliary type AUX, here exemplified by Eᵣₑₚ, and send these error reports Eᵣₑₚ to the user terminal(s) 151 and/or 152 respectively depending on which end recipient(s) that is/are registered in the message handling node 120. The message handling node 120 is configured to generate the at least one error report Eᵣₑₚ of the basic or auxiliary type BSC/AUX by applying a rules system RS. The rules system RS may define a number of criteria for how and when the error report(s) Eᵣₑₚ of the basic or auxiliary type BSC/ AUX shall be issued. In any case, the rules system RS prescribes that the at least one error report Eᵣₑₚ of the basic or auxiliary type BSC/ AUX in respect of a particular one of the automatic devices, say 111, be generated based on the fulfillment of a frequency criterion relating to a number of times at which the message handling node 120 receives the error messages e1 from the particular one device 111 within a first previous period P1.

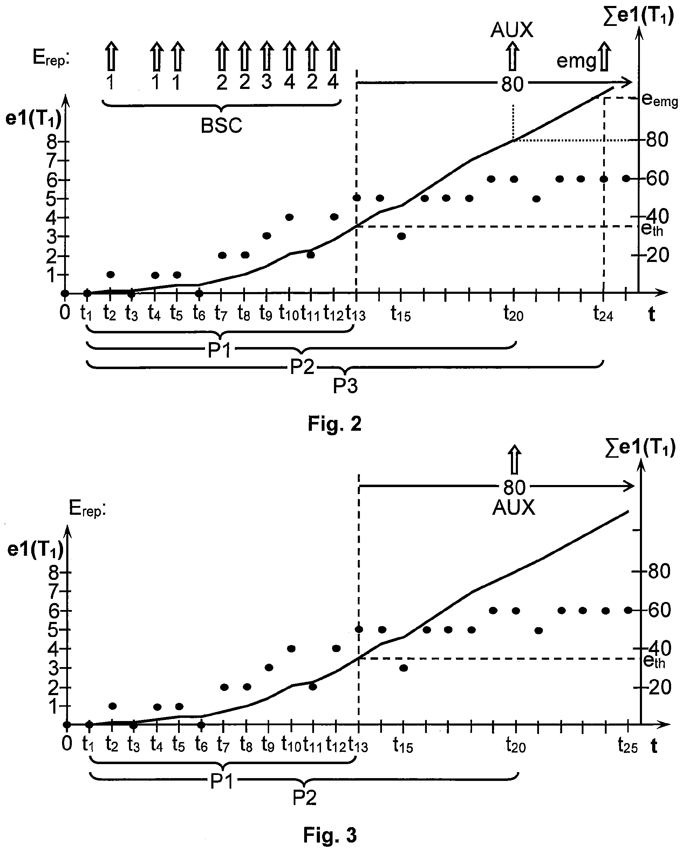

Figure 2 shows a diagram illustrating how first error messages e1(T₁) of a first type T₁ received from the particular one device 111 may serve as a basis for generating the error reports Eᵣₑₚ of the basic or auxiliary type BSC/AUX according to one embodiment of the invention. The diagram represents an instant count of error messages e1(T₁) as dots with respect to a vertical axis on the left hand side, a cumulative count of error messages Σe1(T₁) as a graph with respect to a vertical axis on the right hand side, and time t along the horizontal axis.

Preferably, when receiving the first error message e1 of the first type T₁ from the particular one device 111, the message handling node 120 is configured to check if the frequency criterion is fulfilled by comparing the first cumulative count Σe1(T₁) of error messages of the first type T₁ received from the particular one automatic device 111 during the first previous period P1 with a first cumulative count threshold eₜₕ. The first previous period P1 is a predefined time span, for instance a day, a part of a day, a number of hours etc., since a particular point in time t₁.

According to one embodiment of the invention, the message handling node 120 is configured to set the first cumulative count threshold eₜₕ dynamically based on a time parameter. This could mean that the duration of the first previous period P1 is set to vary over the day, so that the length of this period is different at different times of the day. For example, in the daytime when the farm devices are relatively busy, the duration of the first previous period P1 may be relatively short; and at night, when many farm devices are inactive, the duration of the first previous period P1 may be relatively long.

If the first cumulative count Σe1(T₁) does not exceed the first cumulative count threshold eₜₕ, the message handling node 120 is configured to generate at least one error report Eᵣₑₚ of the basic type BSC. If the first cumulative count Σe1(T₁) exceeds the first cumulative count threshold eₜₕ, the message handling node 120 is instead configured to generate at least one error report Eᵣₑₚ of the auxiliary type AUX.

In the example illustrated in Figure 2, the first cumulative count threshold eₜₕ is set to 35 - a value that is reached by the first cumulative count Σe1(T₁) at a point in time t₁₃. As a result, after the point in time t₁₃, the message handling node 120 will generate at least one error report Eᵣₑₚ of the auxiliary type AUX. For example, this may involve generating an error report Eᵣₑₚ of the auxiliary type AUX at a point in time t₂₀ indicating the first cumulative count Σe1(T₁) at this point in time, a third period P3 after receiving the first error message at t₁. In the example illustrated in Figure 2, the first error report Eᵣₑₚ of the auxiliary type AUX, generated at a point in time t₂₀ indicates the first cumulative count Σe1(T₁) to a value of 80. Of course, the first error report Eᵣₑₚ of the auxiliary type AUX may equally well be sent at any earlier, or later, time on or after the point in time t₁₃, such as at the point in time t₁₃.

According to one embodiment of the invention, the at least one error report Eᵣₑₚ of the basic type BSC indicates an instant first count e1(T₁). I.e. in the example illustrated in Figure 2, at points in time t₂, t₄ and t₅ the error report Eᵣₑₚ of the basic type BSC indicates an instant first count e1(T₁) of 1; at points in time t₇, t₈ and t₁₁ the error report Eᵣₑₚ of the basic type BSC indicates an instant first count e1(T₁) of 2; at a point in time t₉ the error report Eᵣₑₚ of the basic type BSC indicates an instant first count e1(T₁) of 3; and at points in time t₁₀ and t₁₂ the error report Eᵣₑₚ of the basic type BSC indicates an instant first count e1(T₁) of 4.

The message handling node 120 may further be configured to determine if such an amount of error messages of a particular type has been received that an emergency criterion is fulfilled, i.e. a very large number of errors have occurred. Therefore, according to one embodiment of the invention, the message handling node 120 is configured to check if the emergency criterion is fulfilled by comparing the first cumulative count Σe1(T₁) of error messages of the first type T₁ received from the particular one device 111 during the first previous period P1 with an emergency cumulative count threshold e_{emg}. The emergency cumulative count threshold e_{emg} is above, preferably substantially above, the first cumulative count threshold eₜₕ, say a factor 10, 100, 1000 or 10 000, or for example any number between 10 and 100 000. For reasons of clarity, in Figure 2, the first cumulative count threshold eₜₕ is set to a value of 35 and the emergency count threshold e_{emg} is set a value of 100. Typically, the first cumulative count threshold eₜₕ and the emergency count threshold e_{emg} are set depending on the type of automatic device and the type of error.

If the first cumulative count Σe1(T₁) exceeds the emergency cumulative count threshold e_{emg}, the message handling node 120 is configured to send the error report Eᵣₑₚ to the user terminal(s) 151 and/or 152, where the error report Eᵣₑₚ indicates that the emergency cumulative count threshold e_{emg} has been exceeded by error messages of the first type T₁ from said particular one device 111. As is apparent from the example in Figure 2, the emergency cumulative count threshold e_{emg} is probably exceeded sometime between a point in time t₂₃ and a point in time t₂₄. However, it is first at the point in time t₂₄ the message handling node 120 receives an error report e1 indicating such an instant count of error messages e1(T₁), here 6, that the first cumulative count Σe1(T₁) exceeds the emergency cumulative count threshold e_{emg}.

Referring now to Figure 3, we see a diagram illustrating another embodiment of the invention. As in Figure 2, the diagram represents the instant count of error messages e1(T₁) as dots with respect to a vertical axis on the left hand side, the cumulative count of error messages Σe1(T₁) as a graph with respect to a vertical axis on the right hand side, and time t along the horizontal axis.

In the embodiment illustrated in Figure 3, in order to minimize the error reporting to the user terminal(s) 151 and/or 152, the message handling node 120 is configured only to send the at least one error report Eᵣₑₚ if the first cumulative count Σe1(1) exceeds the first cumulative count threshold eₜₕ. Exclusively after that the first cumulative count Σe1(1) has exceeded the first cumulative count threshold eₜₕ the message handling node 120 will send out at least one error report Eᵣₑₚ, namely of the auxiliary type AUX indicating that the first count threshold eₜₕ has been exceeded by error messages of the first type T₁ from said particular one automatic device 111. Thus, up until a point in time t₁₂ before the first cumulative count Σe1(1) exceeds the first cumulative count threshold eₜₕ, the message handling node 120 does not send out any error reports Eᵣₑₚ at all, at least not in respect of the first error messages e1(T₁) of the first type T₁ received from the particular one device 111.

After that the first count threshold eₜₕ has been exceeded, the at least one error report Eᵣₑₚ of the auxiliary type AUX, which is sent out by the message handling node 120 indicates that the first cumulative count threshold eₜₕ has been exceeded by the error messages of the first type T₁ from the particular one automatic device 111 during the first period P1. The at least one error report Eᵣₑₚ of the auxiliary type AUX is preferably sent out only at predefined points in time, which in Figure 3 is exemplified at t₂₀. The at least one error report Eᵣₑₚ of the auxiliary type AUX preferably also indicates the first cumulative count Σe1(T₁) of error messages received during a second previous period P2 since a reference point in time t₁ with respect to which the first previous period P1 is measured, i.e. the basis for determining whether the first cumulative count threshold eₜₕ was exceeded. The second previous period P2 preferably represents a predefined time span, for instance a day, a part of a day, a number of hours etc. The at least one error report Eᵣₑₚ of the auxiliary type AUX is sent only at predefined points in time, which in Figures 2 and 3 is illustrated by means of the at least one error report Eᵣₑₚ of the auxiliary type AUX being sent out to the at least one user terminal 151 and/or 152 at a point in time t₂₀.

It may be advantageous to organize the automatic devices in two or more category of devices from which categories the error messages are treated differently, i.e. the rules system RS specifies a first set of criteria for a first category of devices within said number of automatic devices 111, 112, 113, 114, 115 and 11n and a second set of criteria for a second category of devices within said number of automatic devices 111, 112, 113, 114, 115 and 11n.

Specifically, according to one embodiment of the invention, it is presumed that the particular one device 111 belongs to a first category of devices, and the message handling node 120 is configured to check if the frequency criterion is fulfilled by comparing the first cumulative count Σe1(T₁) of error messages of the first type T₁ received from a further device 112 belonging to a second category of devices during the first previous period P1 with a second cumulative count threshold. If said first cumulative count Σe1(T₁) exceeds the second cumulative count threshold, the message handling node 120 is configured to send the at least one error report Eᵣₑₚ indicating that the second cumulative count threshold has been exceeded by error messages of the first type T₁ from the further device 112. Thus, the level at which the at least one error report Eᵣₑₚ shifts to the auxiliary type AUX can be set differently for the automatic devices of the first and second categories.

The automatic devices of the first and second categories may either represent devices of different kinds or the same kind. Hence, each of the first and second categories of devices may for example include an activity meter, a milk meter, a milking machine, a milking robot or milk extraction equipment for a milking point, a teat sensor, a TOF (time of flight) camera, a vacuum system, a manure handling system, an animal-identity system, a climate control system e.g. with fans and/or sprinklers, a fluid pressure sensor, a mechanical pressure sensor, a herd management system, a washing machine, a cooling system, a communication apparatus for remote communication, a gate system or a feeding system.

According to one embodiment of the invention, the message handling node 120 is configured to check if the frequency criterion is fulfilled by comparing a sum of the first cumulative counts Σe1(T₁) of the error messages of the first type T₁ received from said particular device 111 and said further device 112 during the first previous period P1 with a third cumulative count threshold. The magnitude of the third cumulative count threshold is different from a combined magnitude of the first and second cumulative count thresholds, i.e. third cumulative count threshold is either higher or lower than the first cumulative count threshold plus the second cumulative count threshold. If said sum of the first cumulative counts Σe1(T₁) of the error messages of the first type T₁ exceeds the third cumulative count threshold, the message handling node 120 is configured to send the at least one error report Eᵣₑₚ indicating that the third cumulative count threshold has been exceeded by the error messages of the first type T₁ from said particular device 111 and said further device 112. Such a combined treatment of error messages in the message handling node 120 can be advantageous because although a particular amount of errors may be accepted for an individual automatic device, less than the sum of the individually acceptable cumulative counts may be tolerated for a group of automatic devices.

It is preferable if the message handling node 120 is configured to analyze the received error messages e1, e2, e3, e4, e5 and en to determine an estimated cause of the error messages e1, e2, e3, e4, e5 and/or en. Specifically, here, the received error messages e1, e2, e3, e4, e5 and/or en represent at least two different types of error messages and/or have been received from at least two different automatic devices 111, 112, 113, 114, 115 and/or 11n. Moreover, the message handling node 120 is configured to determine the estimated cause, i.e. a possible fault, based on a combination of at least two of said at least two the error messages e1, e2, e3, e4, e5 and/or en, for instance by applying a deterministic scheme, an algorithm based on an artificial neural network, a connectionist systems or a combination thereof. Namely, for instance, by studying a consecutive order in which different error messages occur and/or by studying how various combinations of error messages occur together conclusions can be drawn regarding a fault that causes these error messages e1, e2, e3, e4, e5 and/or en. First and second errors may be functionally related to one another. For example, a first error relating to a vacuum sensor that occurs in conjunction with a second error indicating failure to attach a teat cup may be caused by a faulty vacuum pressure level, which, in turn, may be the result of a malfunctioning vacuum system.

Often two or more automatic devices 111, 112, 113, 114, 115 and/or 11n are interrelated by being arranged to operate in a consecutive chain of actions. In such a case, error messages originating from an automatic device at a later position in the chain me be caused by an error in an automatic device at an earlier position in the chain. Consequently, it may be concluded that an earliest link in the chain is the cause of all the error messages e1, e2, e3, e4, e5 and/or en.

The message handling node 120 is further configured to present the estimated cause in the at least one error report Eᵣₑₚ of the auxiliary type AUX. Thereby, the user gains valuable information about how the reported error may be corrected.

Typically, some kinds of errors are less critical than others. It is therefore advantageous if it is possible to differentiate between the error messages. According to one embodiment of the invention, the rules system RS prescribes that a subgroup of error messages of the error messages e1, e2, e3, e4, e5 and en pertains to critical alarms. If the message handling node 120 receives an error message in said subgroup, the message handling node 120 is configured to send out the at least one error report Eᵣₑₚ with an indication of the critical alarm to which the error message pertains irrespective of whether said frequency criterion is fulfilled relating to a number of times per unit time the message handling node 120 receives said error message in said subgroup. In other words, an error message in said subgroup always passes through to the user terminal(s) 151 and/or 152.

As mentioned above, the farm management system may further include a control node 140. This node is configured to receive the at least one error report Eᵣₑₚ. Based thereon, the control node 140 is configured to generate at least one statistic report Eₛₜₐₜ. The control node 140 is also configured to store the at least one statistic report Eₛₜₐₜ in a digital storage resource 145. Thereby, it is straightforward to analyze how the farm system performs in terms of when particular errors occur. Furthermore, a user may conclude that the error report(s) Eᵣₑₚ should be generated based on different criteria. For instance, the user may want to elevate or lower at least one cumulative count threshold.

The first cumulative count threshold eₜₕ, the second cumulative count threshold, the third cumulative count threshold and/or the emergency cumulative count threshold e_{emg} in the light the statistic report(s) Eₛₜₐₜ, so that he/she is expected to receive a reasonable number of error report Eᵣₑₚ, and at the same time does not risk missing any critical errors.

Therefore, according to one embodiment of the invention, the control node 140 is further configured to receive at least one programming command PC, for example from one of the user terminals 151 or 152, or from an administrator of the farm management system. In response to the at least one programming command PC, the control node 140 is configured to generate at least one rule adjustment instruction RΔ. The control node 140 is further configured to send the at least one rule adjustment instruction RΔ to the message handling node 120. When received in the message handling node 120, the at least one rule adjustment instruction RΔ is configured to alter the rules system RS that is applied to the error messages e1, e2, e3, e4, e5 and en received therein. Consequently, the filtering behavior of the message handling node 120 may be manipulated in a convenient and a straightforward manner.

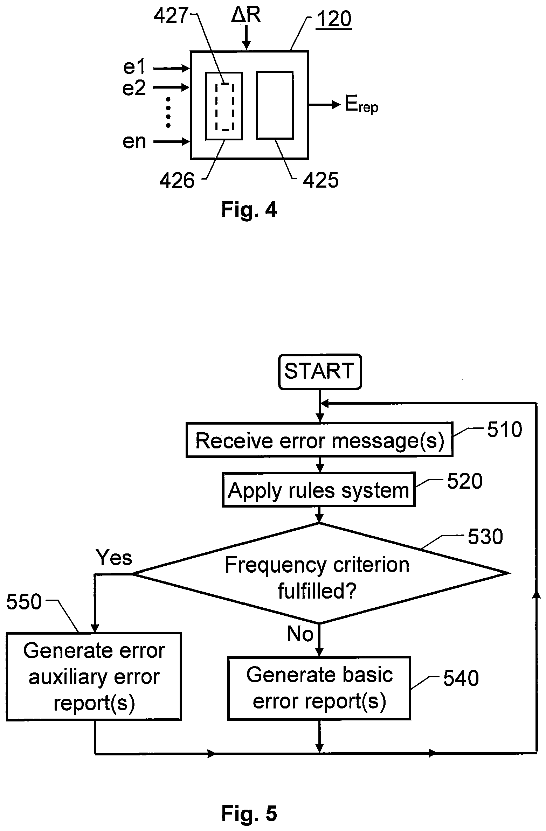

Figure 4 shows a block diagram over a message handling node 120 according to one embodiment the invention. It is generally advantageous if the message handling node 120, which may be represented by a computer, a server or any other type of programmable data communication equipment, is configured to effect the above-described procedure in an automatic manner by executing a computer program 427. Therefore, the message handling node 420 may include a memory unit 425, i.e. non-volatile data carrier, storing the computer program 427, which, in turn, contains software for making processing circuitry in the form of at least one processor 423 in the message handling node 120 execute the above-described actions when the computer program 427 is run on the at least one processor 423.

In order to sum up, and with reference to the flow diagram in Figure 5, we will now describe the general computer-implemented farm management method according to the invention.

In a first step 510, at least one error message is received from a at least one automatic device. In a following step, 520, a rules system is applied to the received message(s). Then, a step 530 specifically checks a frequency criterion is fulfilled relating to a number of times at which the error messages from said particular one device are received within at least one previous period; and if so, a step 550 follows. Otherwise, the procedure continues to a step 540 in which a basic error report is forwarded to at least one user terminal. This may for example involve sending information about a current error count only if the first cumulative count Σe1(1) exceeds the first cumulative count threshold eₜₕ. Thus, generating the basic error report may be an empty step meaning that nothing is sent to any user terminal. In step 550, an auxiliary error report is forwarded to at least one user terminal. This may for example involve sending at least one error report to at least one user terminal, which at least one error report indicates that the first count threshold has been exceeded by error messages of the first type from the particular one device. After step 540 or 550, the procedure loops back to step 510.

All of the process steps, as well as any sub-sequence of steps, described with reference to Figure 5 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

## Claims

1. A farm management system comprising a message handling node (120) configured to:
receive error messages (e1, e2, e3, e4, e5,..., en) from a number of automatic devices (111, 112, 113, 114, 115, ..., 11n),
generate at least one error report (Eᵣₑₚ) based on the received error messages (e1, e2, e3, e4, e5,..., en), and
send the at least one error report (Eᵣₑₚ) to at least one user terminal (151, 152),
**characterized in that** the message handling node (120) is configured to generate the at least one error report (Eᵣₑₚ) of an auxiliary type (AUX) by applying a rules system (RS) prescribing that the at least one error report (Eᵣₑₚ) of the auxiliary type (AUX) in respect of a particular one (111) of said automatic devices be generated based on the fulfillment of a frequency criterion relating to a number of times at which the message handling node (120) receives the error messages (e1) from said particular one automatic device (111) within at least one previous period (P1, P2), wherein, when receiving a first error message of a first type (T₁) from said particular one automatic device (111), the message handling node (120) is configured to:
check if said frequency criterion is fulfilled by comparing a first cumulative count (Σe1(T₁)) of error messages of the first type (T₁) received from the particular one automatic device (111) during a first previous period (P1) with a first cumulative count threshold (eₜₕ), and if said first cumulative count (Σe1(T₁)) exceeds the first cumulative count threshold (eₜₕ),
send the at least one error report (Eᵣₑₚ) of the auxiliary type (AUX) indicating that the first cumulative count threshold (eₜₕ) has been exceeded by error messages of the first type (T₁) from said particular one automatic device (111).

2. The system according to claim1, wherein, if said first cumulative count (Σe1(T₁)) exceeds the first cumulative count threshold (eₜₕ) at a first point in time (t₁₃), the message handling node (120) is configured to, after the first point in time (t₁₃):
send the at least one error report (Eᵣₑₚ) of the auxiliary type (AUX) indicating that the first cumulative count (Σe1(T₁)) of error messages of the particular type (T₁) has been received from the particular one automatic device (111) during a second previous period (P2), said at least one error report (Eᵣₑₚ) of the auxiliary type (AUX) being sent only at predefined points in time (t₂₀).

3. The system according to any one of claims 1 to 2, wherein the message handling node (120) is configured to set the first cumulative count threshold (eₜₕ) dynamically based on a time parameter such that a duration of the first previous period (P1) is different at different times of the day.

4. The system according to any one of claims 1 to 3, wherein said particular one automatic device (111) belongs to a first category of devices within said number of automatic devices (111, 112, 113, 114, 115, ..., 11n), and the message handling node (120) is configured to:
check if said frequency criterion is fulfilled by comparing the first cumulative count (Σe1(T₁)) of error messages of the first type (T₁) received from a further automatic device (112) belonging to a second category of devices within said number of automatic devices (111, 112, 113, 114, 115, ..., 11n) during the first previous period (P1) with a second cumulative count threshold, and if said first cumulative count (Σe1(T₁)) exceeds the second cumulative count threshold,
send the at least one error report (Eᵣₑₚ) indicating that the second cumulative count threshold has been exceeded by error messages of the first type (T₁) from said further automatic device (112).

5. The system according to claim 4, the message handling node (120) is configured to:
check if said frequency criterion is fulfilled by comparing a sum of the first cumulative counts (Σe1(T₁)) of the error messages of the first type (T₁) received from said particular automatic device (111) and said further automatic device (112) during the first previous period (P1) with a third cumulative count threshold being different from a combined magnitude of the first and second cumulative count thresholds, and if said sum of the first cumulative counts (Σe1(T₁)) exceeds the third cumulative count threshold,
send the at least one error report (Eᵣₑₚ) of the auxiliary type (AUX) indicating that the third cumulative count threshold has been exceeded by error messages of the first type (T₁) from said particular automatic device (111) and said further automatic device (112).

6. The system according to any one of the preceding claims, wherein the message handling node (120) is configured to:
analyze the received error messages (e1, e2, e3, e4, e5,..., en), which error messages (e1, e2, e3, e4, e5,..., en) represent at least two different types of error messages and/or have been received from at least two different automatic devices (111, 112, 113, 114, 115, 11n) to determine an estimated cause of a combination of at least two of said at least two the error messages (e1, e2, e3, e4, e5,..., en), and
present the estimated cause in the at least one error report (Eᵣₑₚ) of the auxiliary type (AUX).

7. A computer-implemented method performed in a farm management system, the method comprising:
receiving error messages (e1, e2, e3, e4, e5,..., en) from a number of automatic devices (111, 112, 113, 114, 115, ..., 11n),
generating at least one error report (Eᵣₑₚ) based on the received error messages (e1, e2, e3, e4, e5,..., en), and
sending the at least one error report (Eᵣₑₚ) to at least one user terminal (151, 152),
**characterized by** generating the at least one error report (Eᵣₑₚ) of an auxiliary type (AUX) by applying a rules system (RS) prescribing that the at least one error report (Eᵣₑₚ) of the auxiliary type ( AUX) in respect of a particular one (111) of said automatic devices be generated based on the fulfillment of a frequency criterion relating to a number of times at which the error messages (e1) from said particular one device (111) are received within at least one previous period (P1, P2), wherein, when receiving a first error message of a first type (T₁) from said particular one automatic device (111), the method comprises:
checking if said frequency criterion is fulfilled by comparing a first cumulative count (Σe1(T₁)) of error messages of the first type (T₁) received from the particular one automatic device (111) during a first previous period (P1) with a first cumulative count threshold (eₜₕ), and if said first cumulative count (Σe1(T₁)) exceeds the first cumulative count threshold (eₜₕ),
sending the at least one error report (Eᵣₑₚ) of the auxiliary type (AUX) indicating that the first cumulative count threshold (eₜₕ) has been exceeded by error messages of the first type (T₁) from said particular one automatic device (111).

8. The method according to claim 7, wherein, if said first cumulative count (Σe1(T₁)) exceeds the first cumulative count threshold (eₜₕ) at a first point in time (t₁₃), the method comprises, after the first point in time (t₁₃):
sending the at least one error report (Eᵣₑₚ) of the auxiliary type (AUX) indicating that the first cumulative count (Σe1(T₁)) of error messages of the particular type (T₁) has been received from the particular one automatic device (111) during a second previous period (P2), said at least one error report (Eᵣₑₚ) of the auxiliary type (AUX) being sent only at predefined points in time (t₂₀).

9. The method according to any one of claims 7 to 8, comprising:
setting the first cumulative count threshold (eₜₕ) dynamically based on a time parameter such that a duration of the first previous period (P1) is different at different times of the day.

10. The method according to any one of claims 7 to 9, wherein said particular one automatic device (111) belongs to a first category of devices within said number of automatic devices (111, 112, 113, 114, 115, ..., 11n), and the method comprises:
checking if said frequency criterion is fulfilled by comparing the first cumulative count (Σe1(T₁)) of error messages of the first type (T₁) received from a further automatic device (112) belonging to a second category of devices within said number of automatic devices (111, 112, 113, 114, 115, ..., 11n) during the first previous period (P1) with a second cumulative count threshold, and if said first cumulative count (Σe1(T₁)) exceeds the second cumulative count threshold,
sending the at least one error report (Eᵣₑₚ) indicating that the second cumulative count threshold has been exceeded by error messages of the first type (T₁) from said further automatic device (112).

11. The method according to claim 10, comprising:
checking if said frequency criterion is fulfilled by comparing a sum of the first cumulative counts (Σe1(T₁)) of the error messages of the first type (T₁) received from said particular automatic device (111) and said further automatic device (112) during the first previous period (P1) with a third cumulative count threshold being different from a combined magnitude of the first and second cumulative count thresholds, and if said sum of the first cumulative counts (Σe1(T₁)) exceeds the third cumulative count threshold,
sending the at least one error report (Eᵣₑₚ) of the auxiliary type (AUX) indicating that the third cumulative count threshold has been exceeded by error messages of the first type (T₁) from said particular automatic device (111) and said further automatic device (112).

12. The method according to any one of the claims 7 to 11, further comprising:
analyzing the received error messages (e1, e2, e3, e4, e5,..., en), which error messages (e1, e2, e3, e4, e5,..., en) **represent** at least two different types of error messages and/or have been received from at least two different automatic devices (111, 112, 113, 114, 115, 11n) to determine an estimated cause of a combination of at least two of said at least two the error messages (e1, e2, e3, e4, e5,..., en), and
presenting the estimated cause in the at least one error report (Eᵣₑₚ) of the auxiliary type (AUX).

13. The method according to any one of the claims 7 to 12, wherein the rules system (RS) prescribes that a subgroup of error messages of said error messages (e1, e2, e3, e4, e5,..., en) pertains to critical alarms, and if the message handling node (120) receives an error message in said subgroup, the method comprises:
sending out the at least one error report (Eᵣₑₚ) of the basic or auxiliary type (BSC; AUX) with an indication of the critical alarm to which the error message pertains irrespective of whether said frequency criterion is fulfilled relating to a number of times per unit time the message handling node (120) receives said error message in said subgroup.

14. A computer program (427) loadable into a non-volatile data carrier (426) communicatively connected to a processing unit (425), the computer program (427) comprising software for executing the method according any of the claims 7 to 13 when the computer program is run on the processing unit (425).

15. A non-volatile data carrier (426) containing the computer program (427) of the claim 14.

## Patentansprüche

1. Landwirtschaftliches Verwaltungssystem, umfassend einen Nachrichtenhandhabungsknoten (120), der konfiguriert ist zum:
Empfangen von Fehlernachrichten (e1, e2, e3, e4, e5,..., en) von einer Anzahl automatischer Vorrichtungen (111, 112, 113, 114, 115,..., 11n),
Erzeugen mindestens eines Fehlerberichts (Eᵣₑₚ) basierend auf den empfangenen Fehlernachrichten (e1, e2, e3, e4, e5,..., en) und
Senden des mindestens einen Fehlerberichts (Eᵣₑₚ) an mindestens ein Benutzerendgerät (151, 152),
**dadurch gekennzeichnet, dass** der Nachrichtenhandhabungsknoten (120) konfiguriert ist, um den mindestens einen Fehlerbericht (Eᵣₑₚ) eines Hilfstyps (AUX) durch Anwenden eines Regelsystems (RS) zu erzeugen, das vorschreibt, dass der mindestens eine Fehlerbericht (Eᵣₑₚ) des Hilfstyps (AUX) hinsichtlich einer speziellen einen (111) der automatischen Vorrichtungen basierend auf der Erfüllung eines Frequenzkriteriums erzeugt wird, das sich auf eine Anzahl von Malen, zu denen der Nachrichtenhandhabungsknoten (120) die Fehlernachrichten (e1) von der speziellen einen automatischen Vorrichtung (111) innerhalb mindestens einer vorherigen Periode (P1, P2) empfängt, bezieht, wobei, wenn eine erste Fehlernachricht eines ersten Typs (T₁) von der speziellen einen automatischen Vorrichtung (111) empfangen wird, der Nachrichtenhandhabungsknoten (120) konfiguriert ist zum:
Prüfen, ob das Frequenzkriterium erfüllt ist, durch Vergleichen eines ersten kumulativen Zählwerts (Σe1(T₁)) von Fehlernachrichten des ersten Typs (T₁), die von der speziellen einen automatischen Vorrichtung (111) während einer ersten vorherigen Periode (P1) empfangen wurden, mit einer ersten kumulativen Zählwertschwelle (eₜₕ), und falls der erste kumulative Zählwert (Σe1(T₁)) die erste kumulative Zählwertschwelle (eₜₕ) überschreitet,
Senden des mindestens einen Fehlerberichts (Eᵣₑₚ) des Hilfstyps (AUX), der angibt, dass die erste kumulative Zählwertschwelle (eₜₕ) überschritten wurde, durch Fehlernachrichten des ersten Typs (T₁) von der speziellen einen automatischen Vorrichtung (111).

2. System nach Anspruch1, wobei, falls der erste kumulative Zählwert (Σe1(T₁)) die erste kumulative Zählwertschwelle (eₜₕ) zu einem ersten Zeitpunkt (t₁₃) überschreitet, der Nachrichtenhandhabungsknoten (120) konfiguriert ist zum, nach dem ersten Zeitpunkt (t₁₃):
Senden des mindestens einen Fehlerberichts (Eᵣₑₚ) des Hilfstyps (AUX), der angibt, dass der erste kumulative Zählwert (Σe1(T₁)) von Fehlernachrichten des speziellen Typs (T₁) von der speziellen einen automatischen Vorrichtung (111) während einer zweiten vorherigen Periode (P2) empfangen wurde, wobei der mindestens eine Fehlerbericht (Eᵣₑₚ) des Hilfstyps (AUX) nur zu vorgegebenen Zeitpunkten (t₂₀) gesendet wird.

3. System nach einem der Ansprüche 1 bis 2, wobei der Nachrichtenhandhabungsknoten (120) konfiguriert ist, um die erste kumulative Zählwertschwelle (eₜₕ) basierend auf einem Zeitparameter dynamisch derart einzustellen, dass eine Dauer der ersten vorherigen Periode (P1) zu unterschiedlichen Tageszeiten unterschiedlich ist.

4. System nach einem der Ansprüche 1 bis 3, wobei die spezielle eine automatische Vorrichtung (111) zu einer ersten Kategorie von Vorrichtungen innerhalb der Anzahl automatischer Vorrichtungen (111, 112, 113, 114, 115,..., 11n) gehört und der Nachrichtenhandhabungsknoten (120) konfiguriert ist zum:
Prüfen, ob das Frequenzkriterium erfüllt ist, durch Vergleichen des ersten kumulativen Zählwerts (Σe1(T₁)) von Fehlernachrichten des ersten Typs (T₁), die von einer weiteren automatischen Vorrichtung (112), die zu einer zweiten Kategorie von Vorrichtungen innerhalb der Anzahl automatischer Vorrichtungen (111, 112, 113, 114, 115,..., 11n) gehört, während der ersten vorherigen Periode (P1) empfangen wurden, mit einer zweiten kumulativen Zählwertschwelle, und falls der erste kumulative Zählwert (Σe1(T₁)) die zweite kumulative Zählwertschwelle überschreitet,
Senden des mindestens einen Fehlerberichts (Eᵣₑₚ), der angibt, dass die zweite kumulative Zählwertschwelle überschritten wurde, durch Fehlernachrichten des ersten Typs (T₁) von der weiteren automatischen Vorrichtung (112).

5. System nach Anspruch 4, wobei der Nachrichtenhandhabungsknoten (120) konfiguriert ist zum:
Prüfen, ob das Frequenzkriterium erfüllt ist, durch Vergleichen einer Summe der ersten kumulativen Zählwerte (Σe1(T₁)) der Fehlernachrichten des ersten Typs (T₁), die von der speziellen automatischen Vorrichtung (111) und der weiteren automatischen Vorrichtung (112) während der ersten vorherigen Periode (P1) empfangen wurden, mit einer dritten kumulativen Zählwertschwelle, die sich von einer kombinierten Größe der ersten und der zweiten kumulativen Zählwertschwelle unterscheidet, und falls die Summe der ersten kumulativen Zählwerte (Σe1(T₁)) die dritte kumulative Zählwertschwelle überschreitet,
Senden des mindestens einen Fehlerberichts (Eᵣₑₚ) des Hilfstyps (AUX), der angibt, dass die dritte kumulative Zählwertschwelle überschritten wurde, durch Fehlernachrichten des ersten Typs (T₁) von der speziellen automatischen Vorrichtung (111) und der weiteren automatischen Vorrichtung (112).

6. System nach einem der vorstehenden Ansprüche, wobei der Nachrichtenhandhabungsknoten (120) konfiguriert ist zum:
Analysieren der empfangenen Fehlernachrichten (e1, e2, e3, e4, e5,..., en), wobei die Fehlernachrichten (e1, e2, e3, e4, e5,..., en) mindestens zwei unterschiedliche Typen von Fehlernachrichten darstellen und/oder von mindestens zwei unterschiedlichen automatischen Vorrichtungen (111, 112, 113, 114, 115, 11n) empfangen wurden, um eine geschätzte Ursache einer Kombination mindestens zweier der mindestens zwei Fehlernachrichten (e1, e2, e3, e4, e5,..., en) zu bestimmen, und
Präsentieren der geschätzten Ursache in dem mindestens einen Fehlerbericht (Eᵣₑₚ) des Hilfstyps (AUX).

7. Computerimplementiertes Verfahren, das in einem landwirtschaftlichen Verwaltungssystem durchgeführt wird, das Verfahren umfassend:
Empfangen von Fehlernachrichten (e1, e2, e3, e4, e5,..., en) von einer Anzahl automatischer Vorrichtungen (111, 112, 113, 114, 115,..., 11n),
Erzeugen mindestens eines Fehlerberichts (Eᵣₑₚ) basierend auf den empfangenen Fehlernachrichten (e1, e2, e3, e4, e5,..., en) und
Senden des mindestens einen Fehlerberichts (Eᵣₑₚ) an mindestens ein Benutzerendgerät (151, 152),
**gekennzeichnet durch** Erzeugen des mindestens einen Fehlerberichts (Eᵣₑₚ) eines Hilfstyps (AUX) durch Anwenden eines Regelsystems (RS), das vorschreibt, dass der mindestens eine Fehlerbericht (Eᵣₑₚ) des Hilfstyps (AUX) hinsichtlich einer speziellen einen (111) der automatischen Vorrichtungen basierend auf der Erfüllung eines Frequenzkriteriums erzeugt wird, das sich auf eine Anzahl von Malen, zu denen die Fehlernachrichten (e1) von der speziellen einen automatischen Vorrichtung (111) innerhalb mindestens einer vorherigen Periode (P1, P2) empfangen werden, bezieht, wobei, wenn eine erste Fehlernachricht eines ersten Typs (T₁) von der speziellen einen automatischen Vorrichtung (111) empfangen wird, das Verfahren umfasst:
Prüfen, ob das Frequenzkriterium erfüllt ist, durch Vergleichen eines ersten kumulativen Zählwerts (Σe1(T₁)) von Fehlernachrichten des ersten Typs (T₁), die von der speziellen einen automatischen Vorrichtung (111) während einer ersten vorherigen Periode (P1) empfangen wurden, mit einer ersten kumulativen Zählwertschwelle (eₜₕ), und falls der erste kumulative Zählwert (Σe1(T₁)) die erste kumulative Zählwertschwelle (eₜₕ) überschreitet,
Senden des mindestens einen Fehlerberichts (Eᵣₑₚ) des Hilfstyps (AUX), der angibt, dass die erste kumulative Zählwertschwelle (eₜₕ) überschritten wurde, durch Fehlernachrichten des ersten Typs (T₁) von der speziellen einen automatischen Vorrichtung (111).

8. Verfahren nach Anspruch 7, wobei, falls der erste kumulative Zählwert (Σe1(T₁)) die erste kumulative Zählwertschwelle (eₜₕ) zu einem ersten Zeitpunkt (t₁₃) überschreitet, das Verfahren umfasst, nach dem ersten Zeitpunkt (t₁₃):
Senden des mindestens einen Fehlerberichts (Eᵣₑₚ) des Hilfstyps (AUX), der angibt, dass der erste kumulative Zählwert (Σe1(T₁)) von Fehlernachrichten des speziellen Typs (T₁) von der speziellen einen automatischen Vorrichtung (111) während einer zweiten vorherigen Periode (P2) empfangen wurde, wobei der mindestens eine Fehlerbericht (Eᵣₑₚ) des Hilfstyps (AUX) nur zu vorgegebenen Zeitpunkten (t₂₀) gesendet wird.

9. Verfahren nach einem der Ansprüche 7 bis 8, umfassend:
dynamisch derart Einstellen der ersten kumulativen Zählwertschwelle (eₜₕ) basierend auf einem Zeitparameter, dass eine Dauer der ersten vorherigen Periode (P1) zu unterschiedlichen Tageszeiten unterschiedlich ist.

10. Verfahren nach einem der Ansprüche 7 bis 9, wobei die spezielle eine automatische Vorrichtung (111) zu einer ersten Kategorie von Vorrichtungen innerhalb der Anzahl automatischer Vorrichtungen (111, 112, 113, 114, 115,..., 11n) gehört und das Verfahren umfasst:
Prüfen, ob das Frequenzkriterium erfüllt ist, durch Vergleichen des ersten kumulativen Zählwerts (Σe1(T₁)) von Fehlernachrichten des ersten Typs (T₁), die von einer weiteren automatischen Vorrichtung (112), die zu einer zweiten Kategorie von Vorrichtungen innerhalb der Anzahl automatischer Vorrichtungen (111, 112, 113, 114, 115, ..., 11n) gehört, während der ersten vorherigen Periode (P1) empfangen wurden, mit einer zweiten kumulativen Zählwertschwelle, und falls der erste kumulative Zählwert (Σe1(T₁)) die zweite kumulative Zählwertschwelle überschreitet,
Senden des mindestens einen Fehlerberichts (Eᵣₑₚ), der angibt, dass die zweite kumulative Zählwertschwelle überschritten wurde, durch Fehlernachrichten des ersten Typs (T₁) von der weiteren automatischen Vorrichtung (112).

11. Verfahren nach Anspruch 10, umfassend:
Prüfen, ob das Frequenzkriterium erfüllt ist, durch Vergleichen einer Summe der ersten kumulativen Zählwerte (Σe1(T₁)) der Fehlernachrichten des ersten Typs (T₁), die von der speziellen automatischen Vorrichtung (111) und der weiteren automatischen Vorrichtung (112) während der ersten vorherigen Periode (P1) empfangen wurden, mit einer dritten kumulativen Zählwertschwelle, die sich von einer kombinierten Größe der ersten und der zweiten kumulativen Zählwertschwelle unterscheidet, und falls die Summe der ersten kumulativen Zählwerte (Σe1(T₁)) die dritte kumulative Zählwertschwelle überschreitet,
Senden des mindestens einen Fehlerberichts (Eᵣₑₚ) des Hilfstyps (AUX), der angibt, dass die dritte kumulative Zählwertschwelle überschritten wurde, durch Fehlernachrichten des ersten Typs (T₁) von der speziellen automatischen Vorrichtung (111) und der weiteren automatischen Vorrichtung (112).

12. Verfahren nach einem der Ansprüche 7 bis 11, ferner umfassend:
Analysieren der empfangenen Fehlernachrichten (e1, e2, e3, e4, e5,..., en), wobei die Fehlernachrichten (e1, e2, e3, e4, e5,..., en) mindestens zwei unterschiedliche Typen von Fehlernachrichten darstellen und/oder von mindestens zwei unterschiedlichen automatischen Vorrichtungen (111, 112, 113, 114, 115, 11n) empfangen wurden, um eine geschätzte Ursache einer Kombination mindestens zweier der mindestens zwei Fehlernachrichten (e1, e2, e3, e4, e5,..., en) zu bestimmen, und
Präsentieren der geschätzten Ursache in dem mindestens einen Fehlerbericht (Eᵣₑₚ) des Hilfstyps (AUX).

13. Verfahren nach einem der Ansprüche 7 bis 12, wobei das Regelsystem (RS) vorschreibt, dass eine Untergruppe von Fehlernachrichten der Fehlernachrichten (e1, e2, e3, e4, e5,..., en) kritische Alarme betrifft, und falls der Nachrichtenhandhabungsknoten (120) eine Fehlernachricht in der Untergruppe empfängt, das Verfahren umfasst:
Aussenden des mindestens einen Fehlerberichts (Eᵣₑₚ) des Basis- oder Hilfstyps (BSC; AUX) mit einer Angabe des kritischen Alarms, den die Fehlernachricht betrifft, unabhängig davon, ob das Frequenzkriterium, das sich auf eine Anzahl von Malen pro Zeiteinheit bezieht, die der Nachrichtenhandhabungsknoten (120) die Fehlernachricht in der Untergruppe empfängt, bezieht.

14. Computerprogramm (427), das in einen nichtflüchtigen Datenträger (426) geladen werden kann, der mit einer Verarbeitungseinheit (425) kommunikativ verbunden ist, das Computerprogramm (427) umfassend Software zum Ausführen des Verfahrens nach einem der Ansprüche 7 bis 13, wenn das Computerprogramm auf der Verarbeitungseinheit (425) läuft.

15. Nichtflüchtiger Datenträger (426), der das Computerprogramm (427) des Anspruchs 14 enthält.

## Revendications

1. Système de gestion agricole comprenant un nœud de prise en charge de messages (120) configuré pour :
recevoir des messages d'erreur (e1, e2, e3, e4, e5, ..., en) en provenance d'un certain nombre de dispositifs automatiques (111, 112, 113, 114, 115,..., 11n),
générer au moins un rapport d'erreur (Eᵣₑₚ) en fonction des messages d'erreur (e1, e2, e3, e4, e5,..., en) reçus, et
envoyer l'au moins un rapport d'erreur (Eᵣₑₚ) à au moins un terminal utilisateur (151, 152),
**caractérisé en ce que** le nœud de prise en charge de messages (120) est configuré pour générer l'au moins un rapport d'erreur (Eᵣₑₚ) d'un type auxiliaire (AUX) en appliquant un système de règles (RS) préconisant que l'au moins un rapport d'erreur (Eᵣₑₚ) du type auxiliaire (AUX) à l'égard d'un particulier (111) desdits dispositifs automatiques soit généré en fonction du respect d'un critère de fréquence se rapportant à un nombre de fois auquel le nœud de prise en charge de messages (120) reçoit les messages d'erreur (e1) en provenance dudit dispositif automatique particulier (111) au cours d'au moins une période précédente (P1, P2), dans lequel, lors de la réception d'un premier message d'erreur d'un premier type (T₁) en provenance dudit dispositif automatique particulier (111), le nœud de prise en charge de messages (120) est configuré pour :
vérifier si ledit critère de fréquence est respecté en comparant un premier comptage cumulatif (Σe1(T₁)) de messages d'erreur du premier type (T₁) reçus en provenance du dispositif automatique particulier (111) pendant une première période précédente (P1) à un premier seuil de comptage cumulatif (eₜₕ), et si ledit premier comptage cumulatif (Σe1(T₁)) dépasse le premier seuil de comptage cumulatif (eₜₕ),
envoyer l'au moins un rapport d'erreur (Eᵣₑₚ) du type auxiliaire (AUX) indiquant que le premier seuil de comptage cumulatif (eₜₕ) a été dépassé par des messages d'erreur du premier type (T₁) en provenance dudit dispositif automatique particulier (111).

2. Système selon la revendication 1, dans lequel, si ledit premier comptage cumulatif (Σe1(T₁)) dépasse le premier seuil de comptage cumulatif (eₜₕ) à un premier point dans le temps (t₁₃), le nœud de prise en charge de messages (120) est configuré, après le premier point dans le temps (t₁₃) pour :
envoyer l'au moins un rapport d'erreur (Eᵣₑₚ) du type auxiliaire (AUX) indiquant que le premier comptage cumulatif (Σe1(T₁)) de messages d'erreur du type particulier (T₁) a été reçu en provenance du dispositif automatique particulier (111) pendant une seconde période précédente (P2), ledit au moins un rapport d'erreur (Eᵣₑₚ) du type auxiliaire (AUX) étant envoyé uniquement à des points dans le temps prédéfinis (t₂₀).

3. Système selon l'une quelconque des revendications 1 à 2, dans lequel le nœud de prise en charge de messages (120) est configuré pour régler le premier seuil de comptage cumulatif (eₜₕ) dynamiquement en fonction d'un paramètre de temps de telle sorte qu'une durée de la première période précédente (P1) est différente à différentes heures de la journée.

4. Système selon l'une quelconque des revendications 1 à 3, dans lequel ledit dispositif automatique particulier (111) appartient à une première catégorie de dispositifs au sein dudit nombre de dispositifs automatiques (111, 112, 113, 114, 115, ..., 11n), et le nœud de prise en charge de messages (120) est configuré pour :
vérifier si ledit critère de fréquence est respecté en comparant le premier comptage cumulatif (Σe1(T₁)) de messages d'erreur du premier type (T₁) reçus en provenance d'un dispositif automatique supplémentaire (112) appartenant à une seconde catégorie de dispositifs au sein dudit nombre de dispositifs automatiques (111, 112, 113, 114, 115, ..., 11n) pendant la première période précédente (P1) à un deuxième seuil de comptage cumulatif, et si ledit premier comptage cumulatif (Σe1(T₁)) dépasse le deuxième seuil de comptage cumulatif,
envoyer l'au moins un rapport d'erreur (Eᵣₑₚ) indiquant que le deuxième seuil de comptage cumulatif a été dépassé par des messages d'erreur du premier type (T₁) en provenance dudit dispositif automatique supplémentaire (112).

5. Système selon la revendication 4, le nœud de prise en charge de messages (120) est configuré pour :
vérifier si ledit critère de fréquence est respecté en comparant une somme des premiers comptages cumulatifs (Σe1(T₁)) des messages d'erreur du premier type (T₁) reçus en provenance dudit dispositif automatique particulier (111) et dudit dispositif automatique supplémentaire (112) pendant la première période précédente (P1) à un troisième seuil de comptage cumulatif étant différent d'une grandeur combinée des premier et deuxième seuils de comptage cumulatifs, et si ladite somme des premiers comptages cumulatifs (Σe1(T₁)) dépasse le troisième seuil de comptage cumulatif,
envoyer l'au moins un rapport d'erreur (Eᵣₑₚ) du type auxiliaire (AUX) indiquant que le troisième seuil de comptage cumulatif a été dépassé par des messages d'erreur du premier type (T₁) en provenance dudit dispositif automatique particulier (111) et dudit dispositif automatique supplémentaire (112).

6. Système selon l'une quelconque des revendications précédentes, dans lequel le nœud de prise en charge de messages (120) est configuré pour :
analyser les messages d'erreur (e1, e2, e3, e4, e5,..., en) reçus, ces messages d'erreur (e1, e2, e3, e4, e5,..., en) représentant au moins deux types de messages d'erreur différents et/ou ayant été reçus en provenance d'au moins deux dispositifs automatiques (111, 112, 113, 114, 115, 11n) différents pour déterminer une cause estimée d'une combinaison d'au moins deux desdits au moins deux messages d'erreur (e1, e2, e3, e4, e5,..., en), et
présenter la cause estimée dans l'au moins un rapport d'erreur (Eᵣₑₚ) du type auxiliaire (AUX).

7. Procédé implémenté par ordinateur mis en œuvre dans un système de gestion agricole, le procédé comprenant :
la réception de messages d'erreur (e1, e2, e3, e4, e5,..., en) en provenance d'un certain nombre de dispositifs automatiques (111, 112, 113, 114, 115, ..., 11n),
la génération d'au moins un rapport d'erreur (Eᵣₑₚ) en fonction des messages d'erreur (e1, e2, e3, e4, e5,..., en) reçus, et
l'envoi de l'au moins un rapport d'erreur (Eᵣₑₚ) à au moins un terminal utilisateur (151, 152),
**caractérisé par** la génération de l'au moins un rapport d'erreur (Eᵣₑₚ) d'un type auxiliaire (AUX) en appliquant un système de règles (RS) préconisant que l'au moins un rapport d'erreur (Eᵣₑₚ) du type auxiliaire (AUX) à l'égard d'un particulier (111) desdits dispositifs automatiques soit généré en fonction du respect d'un critère de fréquence se rapportant à un nombre de fois auquel les messages d'erreur (e1) en provenance dudit dispositif particulier (111) sont reçus au cours d'au moins une période précédente (P1, P2), dans lequel, lors de la réception d'un premier message d'erreur d'un premier type (T₁) en provenance dudit dispositif automatique particulier (111), le procédé comprend :
le fait de vérifier si ledit critère de fréquence est respecté en comparant un premier comptage cumulatif (Σe1(T₁)) de messages d'erreur du premier type (T₁) reçus en provenance du dispositif automatique particulier (111) pendant une première période précédente (P1) à un premier seuil de comptage cumulatif (eₜₕ), et si ledit premier comptage cumulatif (Σe1(T₁)) dépasse le premier seuil de comptage cumulatif (eₜₕ),
l'envoi de l'au moins un rapport d'erreur (Eᵣₑₚ) du type auxiliaire (AUX) indiquant que le premier seuil de comptage cumulatif (eₜₕ) a été dépassé par des messages d'erreur du premier type (T₁) en provenance dudit dispositif automatique particulier (111).

8. Procédé selon la revendication 7, dans lequel, si ledit premier comptage cumulatif (Σe1(T₁)) dépasse le premier seuil de comptage cumulatif (eₜₕ) à un premier point dans le temps (t₁₃), le procédé comprend, après le premier point dans le temps (t₁₃) :
l'envoi de l'au moins un rapport d'erreur (Eᵣₑₚ) du type auxiliaire (AUX) indiquant que le premier comptage cumulatif (Σe1(T₁)) de messages d'erreur du type particulier (T₁) a été reçu en provenance du dispositif automatique particulier (111) pendant une seconde période précédente (P2), ledit au moins un rapport d'erreur (Eᵣₑₚ) du type auxiliaire (AUX) étant envoyé uniquement à des points dans le temps prédéfinis (t₂₀).

9. Procédé selon l'une quelconque des revendications 7 à 8, comprenant :
le réglage du premier seuil de comptage cumulatif (eₜₕ) dynamiquement en fonction d'un paramètre de temps de telle sorte qu'une durée de la première période précédente (P1) est différente à différentes heures de la journée.

10. Procédé selon l'une quelconque des revendications 7 à 9, dans lequel ledit dispositif automatique particulier (111) appartient à une première catégorie de dispositifs au sein dudit nombre de dispositifs automatiques (111, 112, 113, 114, 115, ..., 11n), et le procédé comprend :
le fait de vérifier si ledit critère de fréquence est respecté en comparant le premier comptage cumulatif (Σe1(T₁)) de messages d'erreur du premier type (T₁) reçus en provenance d'un dispositif automatique supplémentaire (112) appartenant à une seconde catégorie de dispositifs au sein dudit nombre de dispositifs automatiques (111, 112, 113, 114, 115, ..., 11n) pendant la première période précédente (P1) à un deuxième seuil de comptage cumulatif, et si ledit premier comptage cumulatif (Σe1(T₁)) dépasse le deuxième seuil de comptage cumulatif,
l'envoi de l'au moins un rapport d'erreur (Eᵣₑₚ) indiquant que le deuxième seuil de comptage cumulatif a été dépassé par des messages d'erreur du premier type (T₁) en provenance dudit dispositif automatique supplémentaire (112).

11. Procédé selon la revendication 10, comprenant :
le fait de vérifier si ledit critère de fréquence est respecté en comparant une somme des premiers comptages cumulatifs (Σe1(T₁)) des messages d'erreur du premier type (T₁) reçus en provenance dudit dispositif automatique particulier (111) et dudit dispositif automatique supplémentaire (112) pendant la première période précédente (P1) à un troisième seuil de comptage cumulatif étant différent d'une grandeur combinée des premier et deuxième seuils de comptage cumulatifs, et si ladite somme des premiers comptages cumulatifs (Σe1(T₁)) dépasse le troisième seuil de comptage cumulatif,
l'envoi de l'au moins un rapport d'erreur (Eᵣₑₚ) du type auxiliaire (AUX) indiquant que le troisième seuil de comptage cumulatif a été dépassé par des messages d'erreur du premier type (T₁) en provenance dudit dispositif automatique particulier (111) et dudit dispositif automatique supplémentaire (112).

12. Procédé selon l'une quelconque des revendications 7 à 11, comprenant en outre :
l'analyse des messages d'erreur (e1, e2, e3, e4, e5,..., en) reçus, ces messages d'erreur (e1, e2, e3, e4, e5,..., en) représentant au moins deux types de messages d'erreur différents et/ou ayant été reçus en provenance d'au moins deux dispositifs automatiques (111, 112, 113, 114, 115, 11n) différents pour déterminer une cause estimée d'une combinaison d'au moins deux desdits au moins deux messages d'erreur (e1, e2, e3, e4, e5,..., en), et
la présentation de la cause estimée dans l'au moins un rapport d'erreur (Eᵣₑₚ) du type auxiliaire (AUX).

13. Procédé selon l'une quelconque des revendications 7 à 12, dans lequel le système de règles (RS) préconise qu'un sous-groupe de messages d'erreur desdits messages d'erreur (e1, e2, e3, e4, e5,..., en) concerne des alarmes critiques, et si le nœud de prise en charge de messages (120) reçoit un message d'erreur dans ledit sous-groupe, le procédé comprend :
l'envoi de l'au moins un rapport d'erreur (Eᵣₑₚ) du type basique ou auxiliaire (BSC ; AUX) avec une indication de l'alarme critique que le message d'erreur concerne, indépendamment du respect dudit critère de fréquence se rapportant à un nombre de fois par unité de temps que le nœud de prise en charge de messages (120) reçoit ledit message d'erreur dans ledit sous-groupe.

14. Programme informatique (427) pouvant être chargé dans un support de données non volatil (426) connecté par communications à une unité de traitement (425), le programme informatique (427) comprenant un logiciel pour exécuter le procédé selon l'une quelconque des revendications 7 à 13 lorsque le programme informatique est lancé sur l'unité de traitement (425).

15. Support de données non volatil (426) contenant le programme informatique (427) selon la revendication 14.
